# EUROPEAN PATENT APPLICATION

(11) **EP 3 336 924 A1**
(43) Date of publication of application: **20.06.2018**
(21) Application number: 16203915.0
(22) Date of filing: 14.12.2016
(51) Int. Cl.: H01M 2/10, H01M 2/06, H01M 10/04

(54) **RECHARGEABLE BATTERY SUBUNIT AND RECHARGEABLE BATTERY**

(71) Applicant: Lithium Energy and Power GmbH & Co. KG, 70469 Stuttgart (DE)
(72) Inventor: Wilka, Marcel, Bosch Corporation, 532-0004 (JP)
(74) Representative: Bee, Joachim

(57) **Abstract**

The invention relates to a rechargeable battery subunit (35) comprising: at least one rechargeable battery cell (36); at least one cell housing (37) for accommodating the battery cell (36), wherein the cell housing (37) has two opposite axial end faces (38, 39) separated from each other by a circumferential lateral area (40) of the cell housing (37), and at least one axial end face (38, 39) comprises at least one through hole (41, 42); and at least one contact unit (43, 44) being at least partly electrically conductive and fixed to the cell housing (37) to close the through hole (41, 42), wherein the contact unit (43, 44) is electrically connected with at least one current collector (47, 48) of the battery cell (36) via the through hole (41, 42), and the contact unit (43, 44) comprises at least one outer contact surface (45, 46) facing away from the battery cell (36) for electrically connecting the battery subunit (35) with the outside.

## Description

### Prior Art

The invention relates to a rechargeable battery subunit and a rechargeable battery comprising at least two rechargeable battery subunits.

Recently, rechargeable battery cells, such as lithium ion cells, are used in different applications. For example, battery cells are installed in electric vehicles and hybrid electric vehicles to supply electric drive units of such vehicles with electric power. Generally, several battery cells are combined to form a battery subunit or a battery with the battery cells connected in series.

A conventional rechargeable battery subunit comprises several battery cells with neighboring battery cells being electrically connected with each other by means of cell connectors. The battery cells may be held in place by a subunit casing. Conventionally, each battery cell of such a battery subunit comprises a hard cell casing with metal parts.

### Disclosure of the invention

It is an object of the present invention to improve the volumetric energy density of a rechargeable battery subunit and of a rechargeable battery and to reduce production costs of a rechargeable battery subunit and of a rechargeable battery.

This object is solved by the independent claims. Advantageous embodiments are disclosed in the following description, the dependent claims and the drawings, wherein these embodiments either by taken alone or in any combination of at least two embodiments with each other may relate to a preferred or advantageous aspect of the invention. Embodiments of the rechargeable battery unit may be embodiments of the rechargeable battery and vice versa, even if this is not explicitly disclosed in the following.

A rechargeable battery subunit according to the present invention comprises: at least one rechargeable battery cell; at least one cell housing for accommodating the battery cell, wherein the cell housing has two opposite axial end faces separated from each other by a circumferential lateral area of the cell housing, and at least one axial end face comprises at least one through hole; and at least one contact unit being at least partly electrically conductive and fixed to the cell housing to close the through hole. The contact unit is electrically connected with at least one current collector of the battery cell via the through hole and the contact unit comprises at least one outer contact surface facing away from the battery cell for electrically connecting the battery subunit with the outside.

With the present invention, one or more battery cells are accommodated within the cell housing so that no conventional hard cell casing for each battery cell is required. Instead, with the present invention, one or more soft battery cells are accommodated within the, preferably hard, cell housing. In the rechargeable battery subunit according to the present invention a constructed space which is conventionally occupied by the individual hard cell casings is occupied with active parts, in particular electrodes and separators, of the individual battery cells. Thus, the volumetric energy density of a rechargeable battery subunit according to the present invention is improved compared with a conventional rechargeable battery subunit. This improvement of the volumetric energy density results from the improved volume utilization of the rechargeable battery subunit according to the present invention. Further, since conventional hard cell casings with metal parts are not used with the present invention, production costs of the rechargeable battery subunit according to the present invention are reduced compared with conventional rechargeable battery subunits. Moreover, since conventional hard cell casings with metal parts are not used with the present invention, the weight of the rechargeable battery subunit according to the present invention is reduced compared with conventional rechargeable battery subunits.

The rechargeable battery subunit according to the present invention may comprise two or more rechargeable battery cells accommodated within the cell housing. Each rechargeable battery cell can be a lithium ion cell comprising an electrode stack or constituting a jelly roll cell.

Each axial end face of the cylindrical cell housing may be formed as an oval, elliptic, circular, polygonal, rectangular or quadratic axial end face. Since the volume utilization of a rechargeable battery comprising at least two rechargeable battery subunits having the same shape is higher, when the cell housings of these battery subunits have rectangular or quadratic axial end faces, these shapes are preferred for the axial end faces. The cell housing can be partly or completely made from a plastic material. The current collectors of the at least one battery cell contained within the cell housing are assessable through the at least one through hole of the at least one axial end face of the cell housing. Alternately, each axial end face of the cell housing comprises at least one through hole. The plastic material is, for example, polypropylene, polyethylene, polyimide, polyvinylidene fluoride or the like. Alternately, the cell casing is made at least partly from a metal, e. g. a stainless steel. The contact unit may be adhesively bonded to the housing, in particular for electrically insulating the contact unit from the housing. Alternately, the connection between the contact unit and the housing may be established by injection molding, so that the contact unit is electrically insulated from the housing.

The contact unit is partly or completely electrically conductive. For example, the contact unit may at least partly be made from stainless steel. The contact unit is fixed at least to the axial end face of the cell housing having the at least one through hole, thereby closing the through hole. Since the current collectors of the at least one battery cell contained within the cell housing are assessable through the at least one through hole of the at least one axial end face of the cell housing, the contact unit can be easily electrically connected with at least one current collector of the battery cell via the through hole. Instead of conventionally provided battery terminals, that may be mechanically connected to a conventional cell connector, the present invention provides at least one outer contact surface formed by the contact unit. The outer contact surface faces away from the battery cell and preferably faces at least in the axial direction of the rechargeable battery subunit. No mounting means like a conventional battery terminal is provided at the outer contact surface. By means of the outer contact surface the rechargeable battery subunit may be electrically contacted by a simple touch contact to the outside. If each axial end face of the cell housing comprises at least one through hole, the rechargeable battery subunit comprises two contact units, one for each axial end face of the cell housing and each being fixed to the cell housing. In such a case, the contact units are heteropolar. One contact unit, e. g. the positive polarized contact unit, may be electrically connected with the electrically conductive housing, and the other contact unit may be electrically insulated from the housing.

According to an advantageous embodiment the contact unit is provided only at the axial end surface of the cell housing, or both at the axial end surface and at a portion of the lateral area of the cell housing. If the contact unit is provided only at the axial end surface of the cell housing, corresponding battery subunits comprising one contact unit at each axial end of the cell housing can be brought in contact with each other via their contact units to connect the battery subunits in series. If the contact unit is provided both at the axial end surface and at a portion of the lateral area of the cell housing, corresponding battery subunits comprising one contact unit at each axial end of the cell housing can be brought in contact with each other via their contact units to connect the battery subunits in series and in parallel. These connections of the battery subunits can be realized by simply bringing the battery subunits in contact with each other and pressing the battery subunits together by any suitable means.

According to a further advantageous embodiment the contact unit is at least partly substance-to-substance bonded to the cell housing. For example, the substance-to-substance bonding can be realized by gluing, laser welding or induction heating.

According to a further advantageous embodiment the cell housing is at least partly made from a fiber composite material. Through this, the stiffness and hardness of the cell housing could be improved. For example, the fibers of the fiber composite material may be carbon fibers or glass fibers. The fibers are embedded in a matrix material, for example in polyamide.

According to a further advantageous embodiment an inner or outer surface of the cell housing is partly covered with a metal layer. Through this, a water barrier of the cell housing can be achieved from the inside or the outside. The metal layer can be formed by metal plating, for example chromium plating. Alternatively, a metal sheet may be provided and surrounded by a plastic material. To avoid the creation of short circuits, the metal layer should not be provided at the entire cell housing.

According to a further advantageous embodiment the cell housing comprises at least one axial end section having a reduced cross-sectional area, wherein the contact unit encompasses the axial end section. By this, contact units can be fixed to the cell housing without increasing the outer shape of the battery subunit. Further, the cell housing could be easier closed with the contact units. Moreover, laser welding used for fixing a current collector of the battery cell to the respective contact unit could be carried out much easier. Furthermore, an improvement in a contact resistance for lithium ion battery subunit assembling could be achieved.

According to a further advantageous embodiment the contact unit comprises at least one plate element arranged on the axial end face of the cell housing and at least two leg elements spaced apart from each other, electrically connected with opposite end sections of the plate element and protruding orthogonally from the plate element in the same direction. Such a contact unit encompasses an axial end section of the cell housing.

According to a further advantageous embodiment the contact unit comprises at least one contact element electrically connected with the plate element, facing the battery cell and being electrically connected with the current collector of the battery cell. For example, the contact element is a metal foil. The contact element makes it possible to use ultrasonic welding for connecting the contact element with the current collector of the battery cell more easily after inserting the battery cell in the cell housing.

According to a further advantageous embodiment the plate element comprises two electrically conductive contact sections and an electrically non-conductive section separating the contact sections from each other, and the contact sections are electrically connected with different current collectors of the battery cell. This configuration could be used if the current collectors of the battery cell are arranged on the same side of the battery cell.

According to a further advantageous embodiment the contact unit comprises an inner surface contacting the cell housing, wherein the inner surface is at least partly roughened. Through this, the contact area between the contact unit and the cell housing is increased. This improves the connection between the contact unit and the cell housing. The inner surface of the contact unit could be roughened using a laser. Through this, it is possible to create undercuts at the inner surface of the contact unit that can be filled with molten material of the cell housing, thereby further enhancing the connection between the contact unit and the cell housing.

According to a further advantageous embodiment the contact unit comprises at least one safety venting device. For example, the venting device could be realized by laser cutting the plate element, thereby generating a predetermined break point at the plate element.

According to a further advantageous embodiment the rechargeable battery subunit comprises two or more battery cells arranged within the cell housing, wherein homopolar current collectors of at least two of the battery cells are combined with each other to form a single common current collector for these battery cells, the contact unit comprises at least one clamping element arranged on the side of the plate element facing the battery cells, and an end section of the common current collector is clamped between the plate element and the clamping element. The current collectors of the battery cells may be combined with each other using ultrasonic welding or by simply holding them together with a robot arm. The clamping element may be made from an electrically conductive material, e. g. a metal, or from an electrically non-conductive material, e.g. plastic material.

A rechargeable battery according to the present invention comprises: at least two rechargeable battery subunits according to any one of the according to any one of the foregoing embodiments or any combination of at least two of these embodiments with each other; and at least one clamping device pressing the battery subunits against each other so that the contact units of directly neighboring battery subunits electrically contact each other.

The above described advantages of the rechargeable battery subunit correspond to advantages of the rechargeable battery. The battery subunits of the battery unit need no conventional cell connectors to electrically connect the battery subunits with each other. Instead, the battery subunits are electrically contact each other by simply pressing the battery subunits against each other in such a way, that contact units of directly neighboring battery subunits contact each other.

### Drawings

Further details, features and advantages of the invention are disclosed in the following description and the drawings showing:
- Figure 1: a schematic and perspective view of an embodiment of a cell housing according to the present invention;
- Figure 2: a schematic cross section of an embodiment of a rechargeable battery subunit according to the present invention;
- Figure 3: a schematic cross section of a further embodiment of a rechargeable battery subunit according to the present invention;
- Figure 4: a schematic view of a further embodiment of a cell housing according to the present invention;
- Figure 5: another schematic view of the cell housing shown in Figure 4;
- Figure 6: a schematic and perspective view of a part of the cell housing shown in Figure 4;
- Figure 7: a schematic and perspective view of a further embodiment of a contact unit according to the present invention;
- Figure 8: a schematic cross section of a further embodiment of a rechargeable battery subunit according to the present invention;
- Figure 9: a schematic cross section of a part of a further embodiment of a rechargeable battery subunit according to the present invention;
- Figure 10: a schematic cross section of a part of a further embodiment of a rechargeable battery subunit according to the present invention;
- Figure 11: a schematic view of an embodiment of a rechargeable battery according to the invention;
- Figure 12: a schematic and perspective view of a further embodiment of a contact unit according to the present invention;
- Figure 13: a schematic and perspective view of a further embodiment of a rechargeable battery subunit according to the present invention;
- Figure 14: a schematic cross section of a further embodiment of a rechargeable battery subunit according to the present invention;
- Figure 15: a schematic and perspective view of a further embodiment of a rechargeable battery subunit according to the present invention;
- Figure 16: a schematic cross section of the rechargeable battery unit shown in Figure 15;
- Figure 17: another schematic cross section of the rechargeable battery unit shown in Figure 15;
- Figure 18: a schematic view of an embodiment of a battery cell according to the invention;
- Figure 19: a schematic view of a further embodiment of a battery cell according to the invention;
- Figure 20: a schematic view of a further embodiment of a battery cell according to the invention;
- Figure 21: a schematic view of a further embodiment of a rechargeable battery according to the invention;
- Figure 22: a schematic cross section of a part of a further embodiment of a rechargeable battery subunit according to the present invention;
- Figure 23: a schematic cross section of a further embodiment of a rechargeable battery subunit according to the present invention;
- Figure 24: a schematic and perspective view of a further embodiment of a rechargeable battery subunit according to the present invention;
- Figure 25: a schematic cross section of a further embodiment of a rechargeable battery subunit according to the present invention;
- Figure 26: a schematic view of an embodiment of a clamping element according to the present invention; and
- Figure 27: a schematic view of a further embodiment of a clamping element according to the present invention.

### Preferred embodiments of the invention

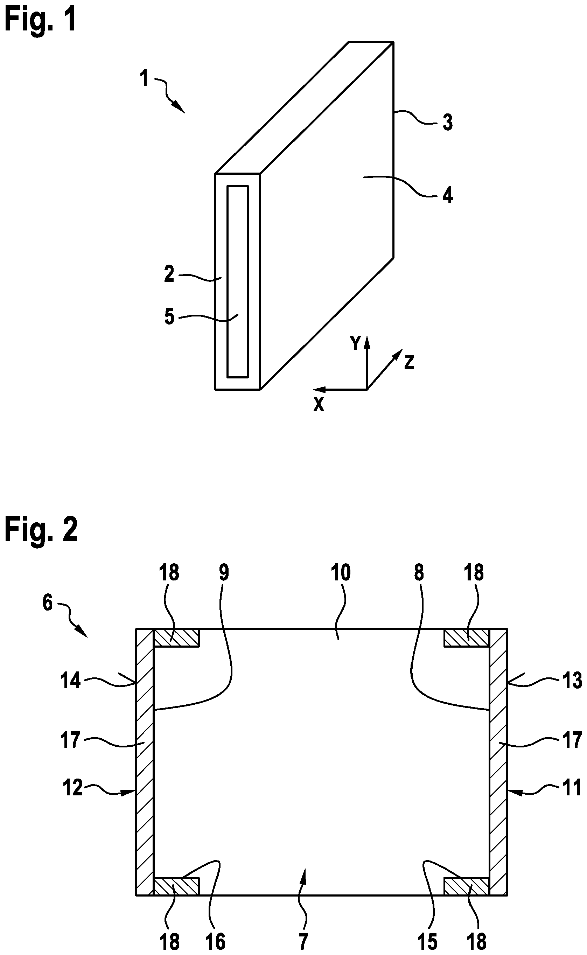

Figure 1 shows a schematic and perspective view of an embodiment of a cell housing 1 of a rechargeable battery subunit (not shown) according to the present invention for accommodating at least one battery cell (not shown). The cell housing 1 is ashlar-shaped and is at least partly made from a plastic material, for example. The cell housing 1 has two opposite axial end faces 2 and 3 separated from each other by a circumferential lateral area 4 of the cell housing 1. Each axial end face 2 and 3 is rectangular. Each axial end face 2 and 3 comprises a through hole 5, only one of them is shown in Figure 1. The cell housing 1 may at least partly be made from a fiber composite material. An inner or outer surface of the cell housing 1 may partly be covered with a metal layer (not shown).

Figure 2 shows a schematic cross section of an embodiment of a rechargeable battery subunit 6 according to the present invention. The battery subunit 6 comprises at least one rechargeable battery cell (not shown) and a cylindrical cell housing 7 for accommodating at least one of the battery cells. The cell housing 7 is, for example, at least partly made from a plastic material and has two opposite axial end faces 8 and 9 separated from each other by a circumferential lateral area 10 of the cell housing 7. Each axial end face 8 and 9 comprises at least one through hole (not shown). The cell housing 7 can at least partly be made from a fiber composite material. An inner or outer surface of the cell housing 7 may partly be covered with a metal layer (not shown).

The rechargeable battery subunit 6 further comprises two contact units 11 and 12 each being at least partly electrically conductive and fixed to the cell housing 7 to close the respective through hole. Each contact unit 11 and 12 is electrically connected to at least one of the current collectors (not shown) of the battery cell via the respective through hole. Each contact unit 11 and 12 comprises an outer contact surface 13 and 14 facing away from the battery cell for electrically connecting the battery subunit 6 with the outside. Each contact unit 11 and 12 is provided both at the respective axial end surface 8 and 9 and at a portion of the lateral area 10 of the cell housing 7. Each contact unit 11 and 12 may at least partly substance-to-substance bonded to the cell housing 7. The cell housing 7 comprises two opposite axial end sections 15 and 16 each having a reduced cross-sectional area. Each contact unit 11 and 12 encompasses one axial end section 15 and 16.

Each contact unit 11 and 12 comprises a plate element 17 arranged on the respective axial end face 8 and 9 of the cell housing 7 and two leg elements 18 spaced apart from each other, electrically connected with opposite end sections of the respective plate element 17, protruding orthogonally from the respective plate element 17 and extending along a part of the lateral area 10 of the cell housing 7. Each contact unit 11 and 12 may comprise at least one contact element (not shown) electrically connected with the respective plate element 17, facing the battery cell and being electrically connected with the current collector of the battery cell. Each contact unit 11 and 12 comprises an inner surface contacting the cell housing 7, wherein the inner surface may at least partly be roughened. At least one contact unit 11 and 12 may comprise at least one safety venting device (not shown).

The rechargeable battery subunit 6 may comprise two or more battery cells arranged within the cell housing 7, wherein homopolar current collectors of at least two of the battery cells are combined with each other to form a single common current collector (not shown) for these battery cells. Each contact unit 11 and 12 may comprise at least one clamping element (not shown) arranged on the side of the respective plate element 17 facing the battery cells. An end section of the common current collector may be clamped between the plate element 17 and the clamping element.

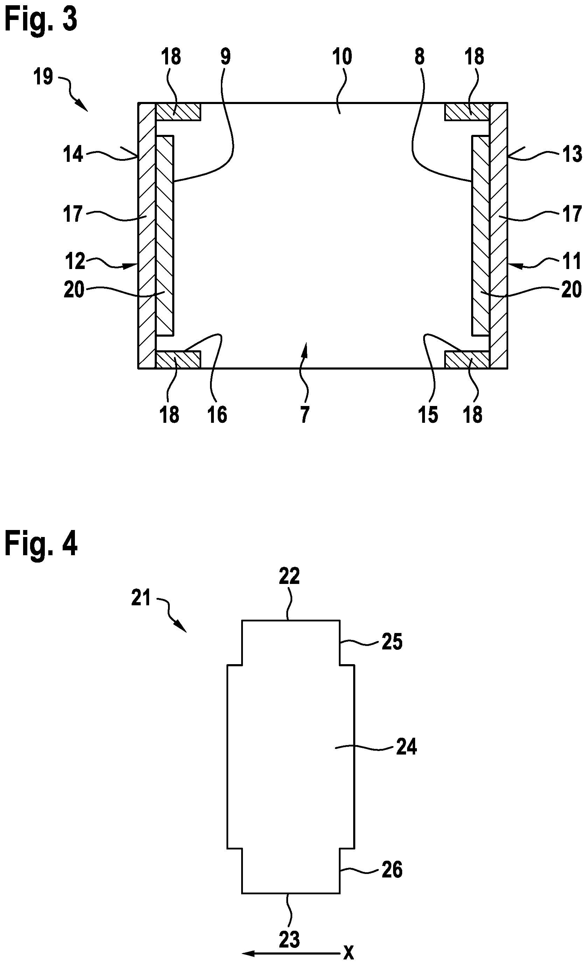

Figure 3 shows a schematic cross section of a further embodiment of a rechargeable battery subunit 19 according to the present invention. The battery subunit 19 differs from the embodiment shown in Figure 2 in that each contact unit 11 and 12 comprises a further plate element 20 fixed to the respective plate element 17 and engaging the respective through hole (not shown) of the respective axial end face 8 and 9. Therefore, the tightness of the rechargeable battery subunit 19 is enhanced compared with the embodiment shown in Figure 2. Here, it is referred to the above description of Figure 2 to prevent repeated descriptions of components of the rechargeable battery subunit 19 being the same as those of the embodiment shown in Figure 2.

Figure 4 shows a schematic view of a further embodiment of a cell housing 21 of a rechargeable battery subunit (not shown) according to the present invention for accommodating at least one battery cell (not shown). The cell housing 21 is, for example, at least partly made from a plastic material and has two opposite axial end faces 22 and 23 separated from each other by a circumferential lateral area 24 of the cell housing 21. Each axial end face 22 and 23 comprises at least one through hole (not shown). The cell housing 21 comprises two opposite axial end sections 25 and 26 having a reduced cross-sectional area. The cell housing 21 may at least partly be made from a fiber composite material. An inner or outer surface of the cell housing 21 may partly be covered with a metal layer (not shown).

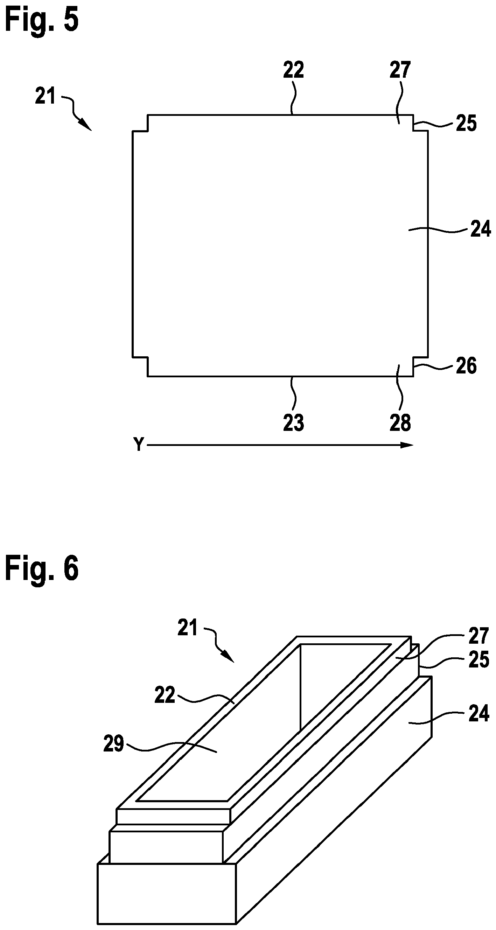

Figure 5 shows another schematic view of the cell housing 21 shown in Figure 4. Figure 5 shows that each axial end section 25 and 26 has a further axial end section 27 and 28 having a further reduced cross-sectional area. The heights of the different gradings of the respective axial end sections 25 and 26 shown in Figures 4 and 5 can alternately have the same value.

Figure 6 shows a schematic and perspective view of a part of the cell housing 21 shown in Figures 4 and 5. The through hole 29 of the axial end face 22 is shown.

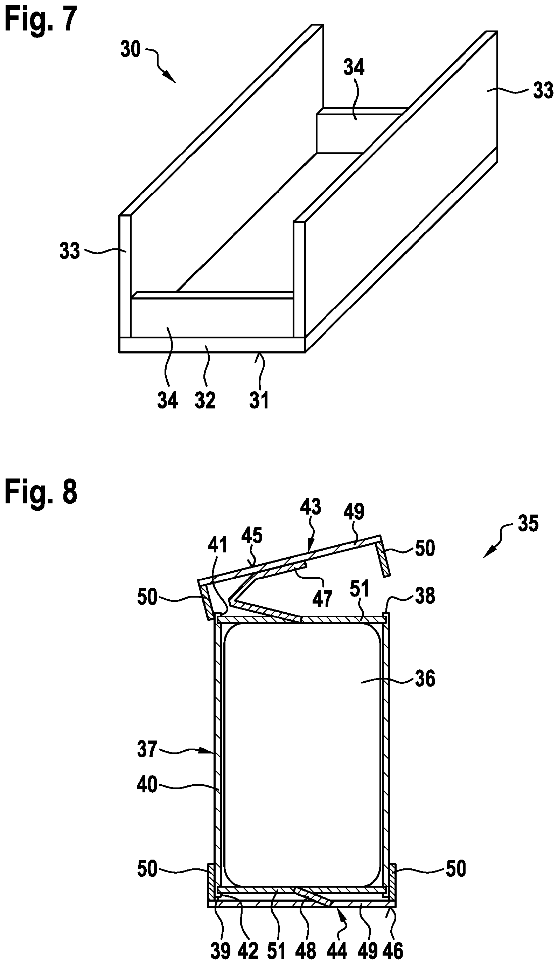

Figure 7 shows a schematic and perspective view of a further embodiment of a contact unit 30 of a rechargeable battery subunit (not shown) according to the present invention. The contact unit 30 is at least partly electrically conductive and comprises an outer contact surface 31 for electrically connecting the battery subunit with the outside. The contact unit 30 comprises a plate element 32 that can be arranged on an axial end face of a cell housing (not shown) of the battery subunit, and two leg elements 33 spaced apart from each other, electrically connected with opposite end sections of the plate element 32 and protruding orthogonally from the plate element 32 in the same direction. The contact unit 30 further comprises two further leg elements 34 spaced apart from each other, electrically connected with opposite end sections of the plate element 32 and protruding orthogonally from the plate element 32 in the same direction as the leg elements 33. The heights of the further leg elements 34 is smaller than the heights of the leg elements 33. The further leg elements 34 extend orthogonal to the leg elements 33. The contact unit 30 may comprise at least one contact element (not shown) electrically connected with the plate element 32. The contact unit 30 may comprise an inner surface being at least partly roughened. The contact unit 30 may comprise at least one safety venting device (not shown).

Figure 8 shows a schematic cross section of a further embodiment of a rechargeable battery subunit 35 according to the present invention. The battery subunit 35 comprises a rechargeable battery cell 36 having stacked electrodes (not shown) or jelly roll electrodes (not shown). Further, the battery subunit 35 comprises a cell housing 37 for accommodating the battery cell 36. The cell housing 37 is, for example, at least partly made from a plastic material and has two opposite axial end faces 38 and 39 separated from each other by a circumferential lateral area 40 of the cell housing 37. Each axial end face 38 and 39 comprises a through hole 41 and 42. The cell housing 37 may at least partly be made from a fiber composite material. An inner or outer surface of the cell housing 37 may partly be covered with a metal layer (not shown).

The rechargeable battery subunit 35 comprises two opposite contact units 43 and 44 being at least partly electrically conductive. The contact unit 44 is already fixed to the cell housing 37 to close the through hole 42. The contact unit 43 is shown in a mounting state before closing the through hole 41 with the contact unit 43 and before fixing the contact unit 43 to the cell housing 37. Each contact unit 43 and 44 comprises an outer contact surface 45 and 46 facing away from the battery cell 36 for electrically connecting the battery subunit 35 with the outside. Each contact unit 43 and 44 is provided at the respective axial end surface 38 and 39 and at a portion of the lateral area 40 of the cell housing 37. Each contact unit 43 and 44 may at least partly be substance-to-substance bonded to the cell housing 37.

Each contact unit 43 and 44 is electrically connected to one of the current collectors 47 and 48 of the battery cell 36 via the respective through hole 41 and 42. The current collector 47 is kinked or folded when the contact unit 43 is fixed at the cell housing 37. The current collectors 47 and 48 are connected with the respective contact unit 43 and 44 using ultrasonic welding. The rechargeable battery subunit 35 comprises two plastic discs 51 axially arranged on opposite sides of the battery cell 36 and preventing a short circuit.

Each contact unit 43 and 44 comprises a plate element 49 arranged on the respective axial end face 38 and 39 of the cell housing 37 and two leg elements 50 spaced apart from each other, electrically connected with opposite end sections of the respective plate element 49, protruding orthogonally from the respective plate element 49 and extending along at least a part of the lateral area 40 of the cell housing 37. Each contact unit 43 and 44 comprises an inner surface contacting the cell housing 37, wherein the inner surface may at least partly be roughened. Each contact unit 43 and 44 may comprise at least one safety venting device (not shown).

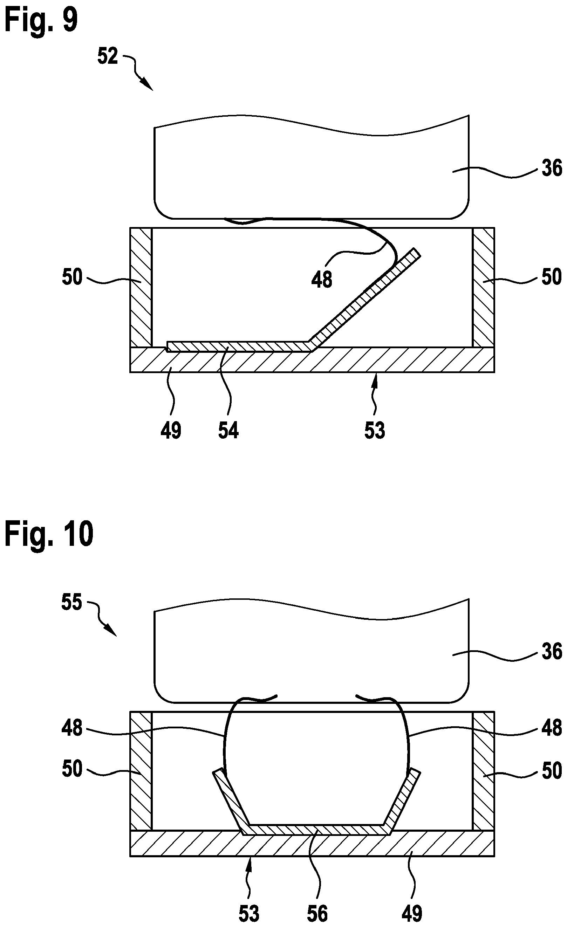

Figure 9 shows a schematic cross section of a part of a further embodiment of a rechargeable battery subunit 52 according to the present invention. The battery subunit 52 differs from the embodiment shown in Figure 8 in that the contact unit 53 comprises a contact element 54 in form of a metal foil electrically connected with the plate element 49, facing the battery cell 36 and being electrically connected with the current collector. Providing this contact element 54 makes the ultrasonic welding to electrically connect the battery cell 36 with the contact unit 53 much easier, in particular after introducing the battery cell 36 in the cell housing (not shown). Here, it is referred to the above description of Figure 8 to prevent repeated descriptions of components of the rechargeable battery subunit 52 being the same as those of the embodiment shown in Figure 8.

Figure 10 shows a schematic cross section of a part of a further embodiment of a rechargeable battery subunit 55 according to the present invention. The battery subunit 55 differs from the embodiment shown in Figure 9 in that the battery cell 36 comprises two current collectors 48 electrically connected with the contact element 56 electrically connected with the plate element 49. For this, the battery cell 36 may comprise one jelly roll for each current collector 48. Here, it is referred to the above description of Figure 9 to prevent repeated descriptions of components of the rechargeable battery subunit 55 being the same as those of the embodiment shown in Figure 9.

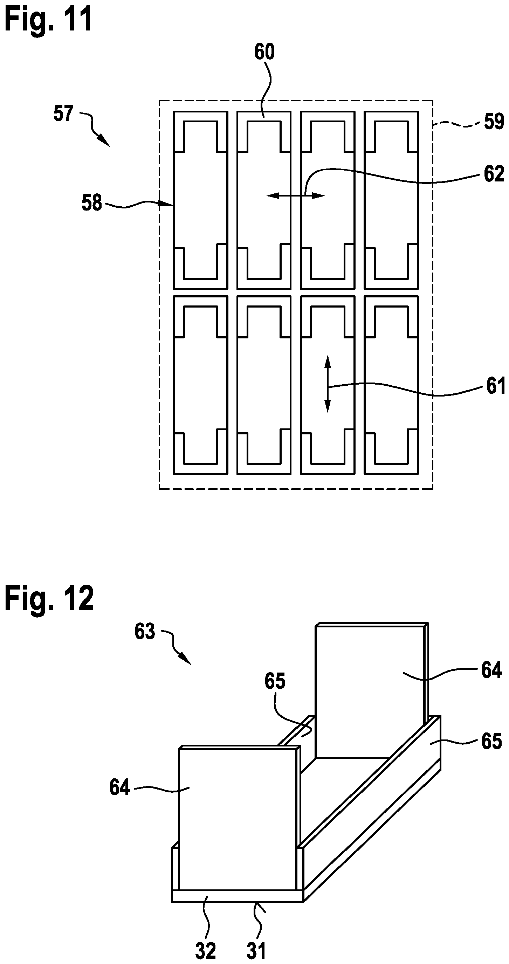

Figure 11 shows a schematic view of an embodiment of a rechargeable battery 57 according to the invention. The rechargeable battery 57 comprises several rechargeable battery subunits 58 and a clamping device 59 pressing the battery subunits 58 against each other so that the contact units 60 of directly neighboring battery subunits 58 electrically contact each other. The battery subunits 58 are connected in series in the direction indicated by arrow 61 and are connected in parallel in the direction indicated by arrow 62. The battery subunits 58 may be constructed according to any embodiment shown in one of the other figures or according to any combination of at least two of these embodiments with each other.

Figure 12 shows a schematic and perspective view of a further embodiment of a contact unit 63 of a rechargeable battery subunit (not shown) according to the present invention. The contact unit 63 differs from the embodiment shown in Figure 7 in that the height of the further leg elements 64 is larger than the height of the leg elements 65. This embodiment is advantageous with respect to swelling of the battery cell or cells (not shown) which occurs when operating a corresponding battery subunit. In Figure 7 this swelling of the battery cell or cells is restricted due to the longer leg elements (reference sign 33 in Figure 7). Here, it is referred to the above description of Figure 7 to prevent repeated descriptions of components of the contact unit 63 being the same as those of the embodiment shown in Figure 7.

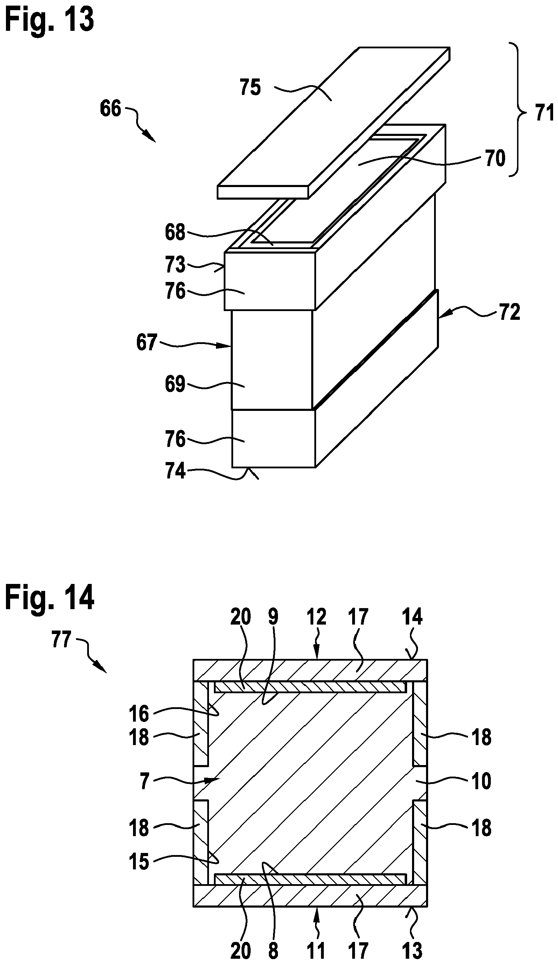

Figure 13 shows a schematic and perspective view of a further embodiment of a rechargeable battery subunit 66 according to the present invention. The battery subunit 66 comprises at least one rechargeable battery cell (not shown) and a cell housing 67 for accommodating the battery cell. The cell housing 67 is, for example, at least partly made from a plastic material and has two opposite axial end faces 68 (only one shown) separated from each other by a circumferential lateral area 69 of the cell housing 67. Each axial end face 68 comprises a through hole 70 (only one shown). The cell housing 67 may at least partly be made from a fiber composite material. An inner or outer surface of the cell housing 67 may partly be covered with a metal layer (not shown).

The rechargeable battery subunit 66 further comprises two opposite contact units 71 and 72 being at least partly electrically conductive. The contact unit 72 is already fixed to the cell housing 67 to close the through hole (not shown). The contact unit 71 is shown in a mounting state where the through hole 70 is not yet closed. Each contact unit 71 and 72 is electrically connected to one of the current collectors (not shown) of the battery cell via the respective through hole 70. Each contact unit 71 and 72 comprises an outer contact surface 73 and 74 facing away from the battery cell for electrically connecting the battery subunit 66 with the outside. Each contact unit 71 and 72 is provided at the respective axial end surface 68 and at a portion of the lateral area 69 of the cell housing 67. Each contact unit 71 and 72 may at least partly be substance-to-substance bonded to the cell housing 67.

Each contact unit 71 and 72 comprises a plate element 75 arranged on the respective axial end face 68 of the cell housing 67 and a rectangular contact element 76 surrounding a respective axial end section of the cell housing 67. The rectangular contact element 76 is electrically connected with the respective plate element 75 (shown for contact unit 72), protrudes orthogonally from the respective plate element 75 and extends along at least a part of the lateral area 69 of the cell housing 67. Each contact unit 71 and 72 may comprise at least one contact element (not shown) electrically connected with the respective plate element 75, facing the battery cell and being electrically connected with the respective current collector of the battery cell. Each contact unit 71 and 72 comprises an inner surface contacting the cell housing 67, wherein the inner surface may at least partly be roughened. Each contact unit 71 and 72 may comprise at least one safety venting device (not shown).

By using such a two-parts contact unit 71 and 72 the closing of the cell housing 67 and the arrangement of the contact units 71 and 72 on the cell housing 67 could be optimized. Also, the volume occupancy could be optimized. Moreover, laser welding is very easy due to the metal-metal contact between the two parts 75 and 76 of each contact unit 71 and 72.

Figure 14 shows a schematic cross section of a further embodiment of a rechargeable battery subunit 77 according to the present invention. The battery subunit 77 differs from the embodiment shown in Figure 3 mainly in that the leg elements 18 are made longer. Through this, the stability of the plastic-metal contact between the contact units 11 and 12 and the cell housing 7 is improved. Here, it is referred to the above description of Figure 3 to prevent repeated descriptions of components of the rechargeable battery subunit 77 being the same as those of the embodiment shown in Figure 3.

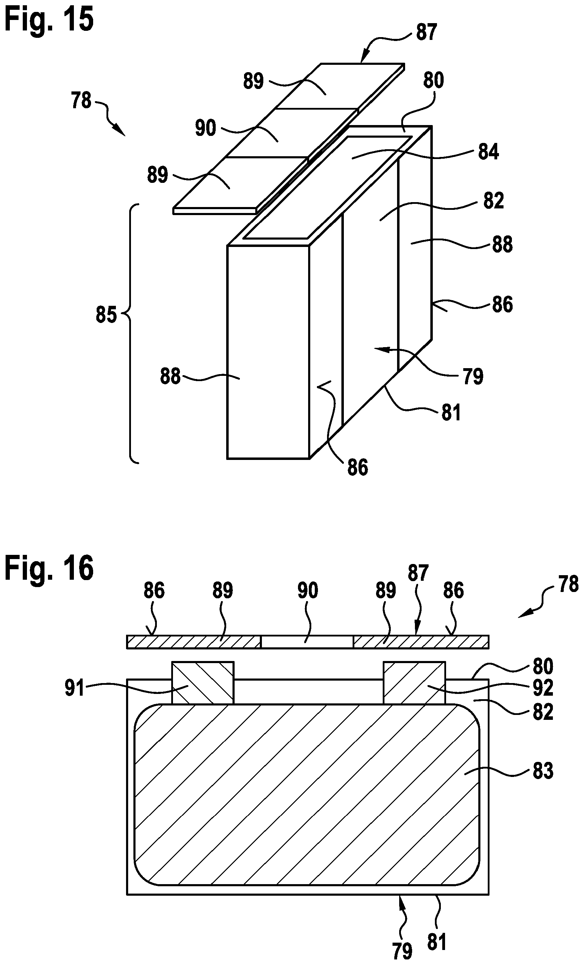

Figure 15 shows a schematic and perspective view of a further embodiment of a rechargeable battery subunit 78 according to the present invention. The battery subunit 78 comprises at least one rechargeable battery cell (not shown) and a cell housing 79 for accommodating the battery cell. The cell housing 79 is, for example, at least partly made from a plastic material and has two opposite end faces 80 and 81 separated from each other by a circumferential lateral area 82 of the cell housing 79. Only the axial end face 80 comprises a through hole 84. The cell housing 79 may at least partly be made from a fiber composite material. An inner or outer surface of the cell housing 79 may partly be covered with a metal layer (not shown).

The rechargeable battery subunit 79 comprises only one contact unit 85 being at least partly electrically conductive. In Figure 15 the contact unit 85 is shown in a mounting state before the through hole 84 is closed with the contact unit 85. The contact unit 85, in a state fixed to the cell housing 79, is electrically connected to heteropolar current collectors of the battery cell via the through hole 84. The contact unit 85 comprises at least one outer contact surface 86 facing away from the battery cell for electrically connecting the battery subunit 78 with the outside. The contact unit 85 is provided at the axial end surface 80 and at a portion of the lateral area 82 of the cell housing 79. The contact unit 85 is at least partly substance-to-substance bonded to the cell housing 79. The contact unit 85 comprises an inner surface contacting the cell housing 79, wherein the inner surface may at least partly be roughened. The contact unit 85 may comprise at least one safety venting device (not shown).

The contact unit 85 comprises a plate element 87 arrangeable on the axial end face 80 of the cell housing 79 and two L-shaped leg elements 88 spaced apart from each other, electrically connected with opposite end sections of the plate element 87, protruding orthogonally from the plate element 87 and extending along the entire lateral area 82 of the cell housing 79. The plate element 87 comprises two electrically conductive contact sections 89 and an electrically non-conductive section 90 separating the contact sections 89 from each other. The contact sections 89 are electrically connected with different current collectors of the battery cell. The contact unit 85 may comprise two contact elements (not shown) electrically connected with the respective contact section 89 of the plate element 87, facing the battery cell and being electrically connected with the respective current collector of the battery cell.

Figure 16 shows a schematic cross section of the rechargeable battery subunit 78 shown in Figure 15. Figure 16 shows the battery cell 83 of the battery subunit 78. The battery cell 83 comprises two current collectors 91 and 92 arranged on the same side (top side) of the battery cell 83. When the plate element 87 is fixed to the cell housing 79, the current collector 91 electrically contact the contact section 89, shown on the left in Figure 16, and the current collector 92 electrically contacts the contact section 89, shown on the right in Figure 16.

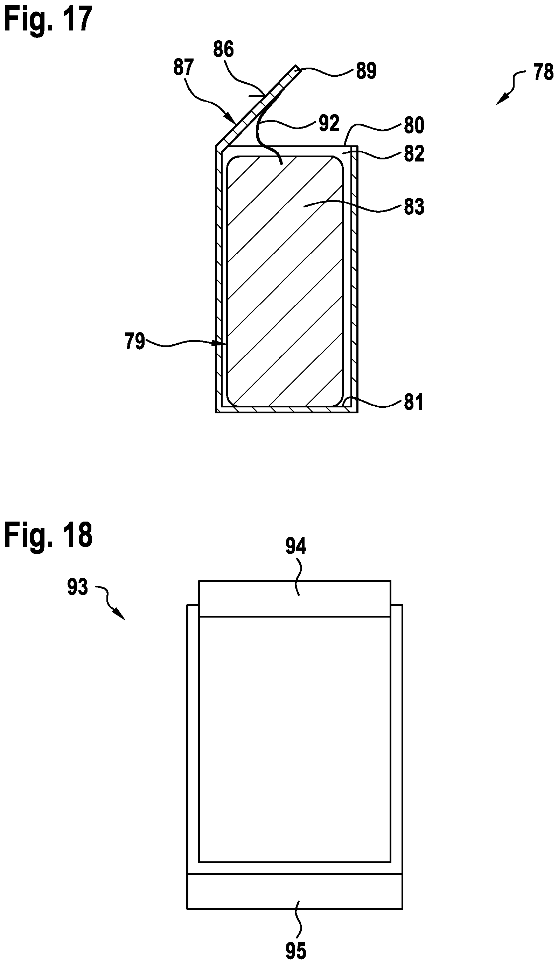

Figure 17 shows another schematic cross section of the rechargeable battery subunit 78 shown in Figure 15. Figure 17 shows the current collector 92 electrically connected to the contact section 89 of the plate element 87.

Figure 18 shows a schematic view of an embodiment of a battery cell 93 of a rechargeable battery subunit (not shown) according to the present invention. The battery cell 93 comprises heteropolar current collector flags 94 and 95 at opposite ends of the battery cell 93. Each current collector flag 94 and 95 extends approximately along the entire width of the battery cell 93. This leads to a very good current distribution but also to a higher stiffness of the current collector flags 94 and 95. The latter may hinder kinking or folding of the current collector flags 94 and 95 during assembly of the corresponding rechargeable battery subunit.

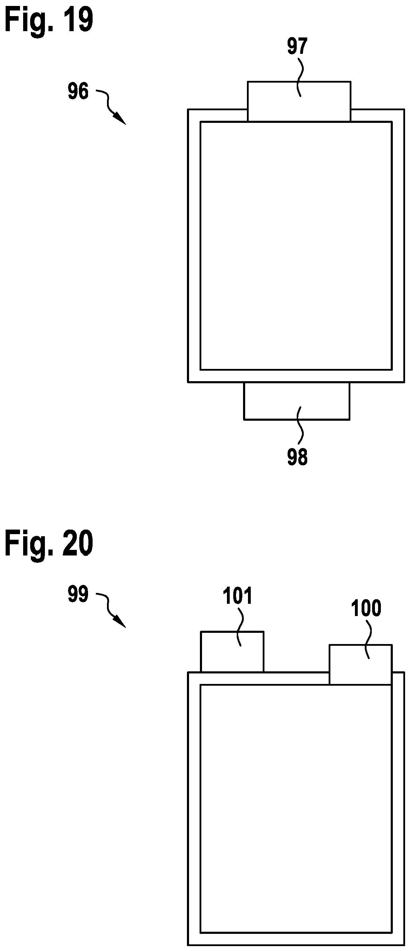

Figure 19 shows a schematic view of an embodiment of a battery cell 96 of a rechargeable battery subunit (not shown) according to the present invention. The battery cell 96 comprises heteropolar current collector flags 97 and 98 at opposite ends of the battery cell 96. Each current collector flag 94 and 95 extends approximately along the half width of the battery cell 96. This leads to a worse current distribution compared with the embodiment shown in Figure 18. But the stiffness of the current collector flags 97 and 98 is reduced compared with those shown in Figure 18. This might simplify kinking or folding of the current collector flags 97 and 98 during assembly of the corresponding rechargeable battery subunit.

Figure 20 shows a schematic view of an embodiment of a battery cell 99 of a rechargeable battery subunit (not shown) according to the present invention. The battery cell 99 comprises heteropolar current collector flags 100 and 101 at the same end of the battery cell 99. Each current collector flag 100 and 101 extends approximately along one third of the width of the battery cell 99. This leads to a worse current distribution compared with the embodiment shown in Figure 19. But since the current collector flags 100 and 101 are at the same side of the battery cell 99, volume occupancy could be improved.

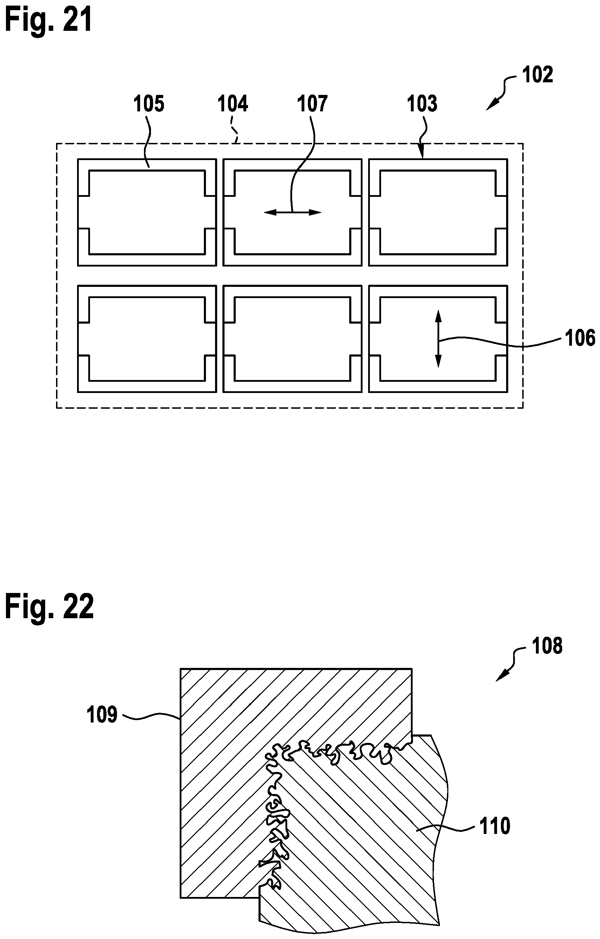

Figure 21 shows a schematic view of an embodiment of a rechargeable battery 102 according to the invention. The rechargeable battery 102 comprises six rechargeable battery subunits 103 and a clamping device 104 pressing the battery subunits 103 against each other so that the contact units 105 of directly neighboring battery subunits 103 electrically contact each other. The battery subunits 103 are connected in series in the direction indicated by arrow 106 and are connected in parallel in the direction indicated by arrow 107. The battery subunits 103 may be constructed according to any embodiment shown in one of the other figures or according to any combination of at least two of these embodiments with each other.

Figure 22 shows a schematic cross section of a part of a further embodiment of a rechargeable battery subunit 108 according to the present invention. Figure 22 shows a contact unit 109 and the cell housing 110 of the battery sub unit 108. The contact unit 109 comprises an inner surface contacting the cell housing 110, wherein the inner surface is at least partly roughened to enhance the connection between the contact unit 109 and the cell housing 110.

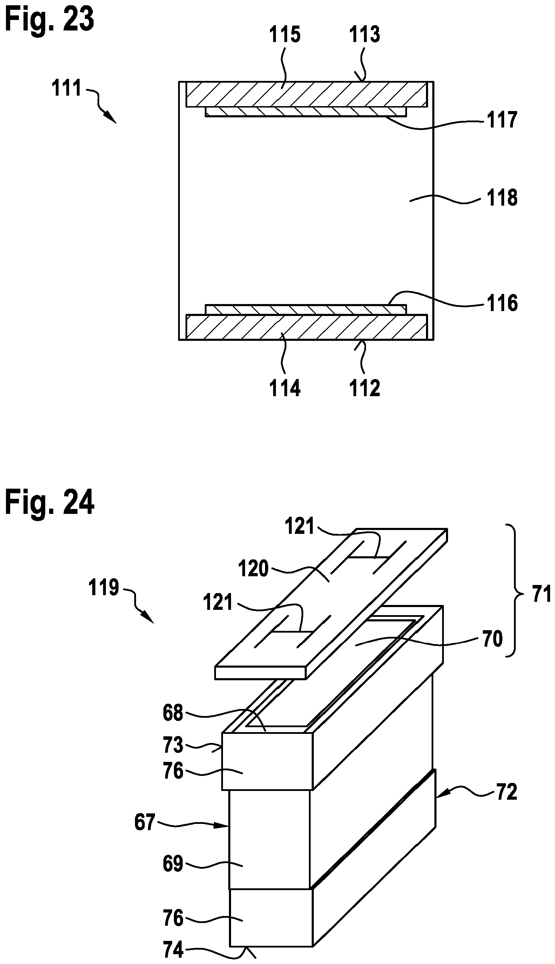

Figure 23 shows a schematic cross section of a further embodiment of a rechargeable battery subunit 111 according to the present invention. The battery subunit 111 differs from the embodiment shown in Figure 14 in that the contact surfaces 112 and 113 of the contact units 114 and 115 is only provided at the respective axial end face 116 and 117 of the cell housing 118. Here, it is referred to the above description of Figure 14 to prevent repeated descriptions of components of the rechargeable battery unit 111 being the same as those of the embodiment shown in Figure 14.

Figure 24 shows a schematic and perspective view of a further embodiment of a rechargeable battery subunit 119 according to the present invention. The battery subunit 119 differs from the embodiment shown in Figure 13 in that the plate element 120 comprises two safety venting devices 121 formed using laser cutting. Here, it is referred to the above description of Figure 13 to prevent repeated descriptions of components of the rechargeable battery subunit 119 being the same as those of the embodiment shown in Figure 13.

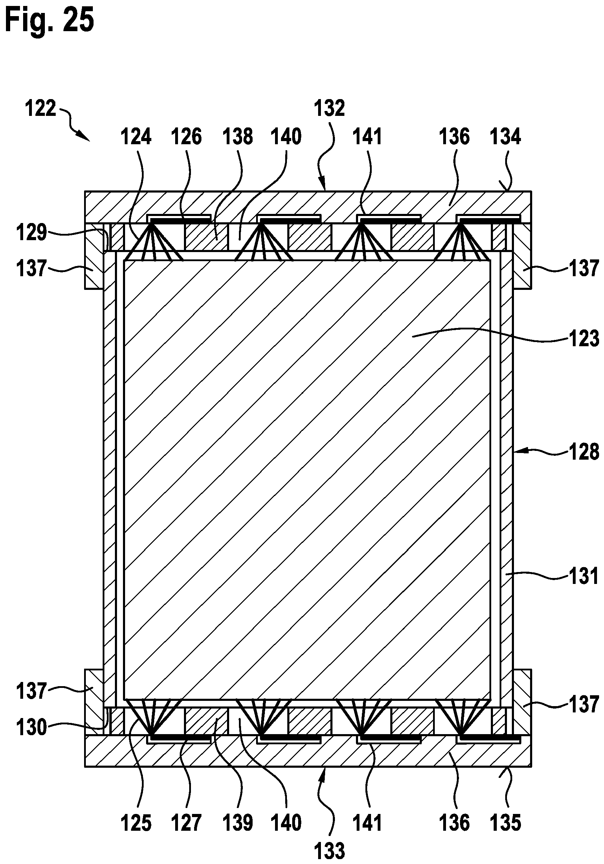

Figure 25 shows a schematic view of a further embodiment of a rechargeable battery subunit 122 according to the present invention. The battery subunit 122 comprises a plurality of rechargeable battery cells (not shown) contained in a soft sheathing 123. Homopolar current collector flags 124 and 125 of groups each consisting of five battery cells are combined with each other to form a single common current collector flag 126 and 127 for these battery cells. The combined current collector flags 124 and 125 may be held together, for example by a robot arm, or may be substance-to-substance bonded with each other to form the respective common current collector flag 126 and 127.

The rechargeable battery subunit 122 further comprises a cell housing 128 for accommodating the battery cells. The cell housing 128 is, for example, at least partly made from a plastic material and has two opposite axial end faces 129 and 130 separated from each other by a circumferential lateral area 131 of the cell housing 128. Each axial end face 129 and 130 comprises a through hole. The cell housing 128 may at least partly be made from a fiber composite material. An inner or outer surface of the cell housing 128 may partly be covered with a metal layer (not shown).

The rechargeable battery unit 122 comprises two opposite contact units 132 and 133 each being at least partly electrically conductive and fixed to the cell housing 128 to close the respective through hole. Each contact unit 132 and 133 is electrically connected to homopolar current collectors (not shown) of the battery cell via the respective through hole. Each contact unit 132 and 133 comprises at least one outer contact surface 134 and 135 facing away from the battery cells for electrically connecting the battery subunit 122 with the outside. Each contact unit 132 and 133 is provided at the respective axial end surface 129 and 130 and at a portion of the lateral area 131 of the cell housing 128. Each contact unit 132 and 133 is at least partly substance-to-substance bonded to the cell housing 128. Each contact unit 132 and 133 comprises an inner surface contacting the cell housing 128, wherein the inner surface may at least partly be roughened. At least one contact unit 132 and 133 may comprise at least one safety venting device (not shown).

Each contact unit 132 and 133 comprises a plate element 136 arranged on the respective axial end face 129 and 130 of the cell housing 128 and at least two leg elements 137 spaced apart from each other, electrically connected with opposite end sections of the plate element 136, protruding orthogonally from the plate element 136 and extending along at least a part of the lateral area 131 of the cell housing 128. Each contact unit 132 and 133 comprises a clamping element 138 and 139 arranged on the side of the respective plate element 136 facing the battery cells. An end section of each common current collector 126 and 127 is clamped between the respective plate element 136 and the respective clamping element 138 and 139. Each clamping element 138 and 139 comprises four longitudinal through holes 140. The current collector flags 124 and 125 of the battery cells extend through the through holes 140.

Preferable, the number of combined current collector flags 124 and 125 is as large as possible. The maximal angle between combined current collector flags 124 and 125 is 90°, for example. The heights of the clamping elements 138 and 139 are chosen depending of the required stability und the desired volume occupancy.

Each plate element 136 comprises one recess 141 for each common current collector flag 126 and 127. Alternatively or additively, each clamping element 138 and 139 may comprise one recess for each current collector flag 126 and 127.

The length of the contact area between the respective common current flag 126 and 127 and the respective plate element 136 can be adjusted according to the desired contact resistance.

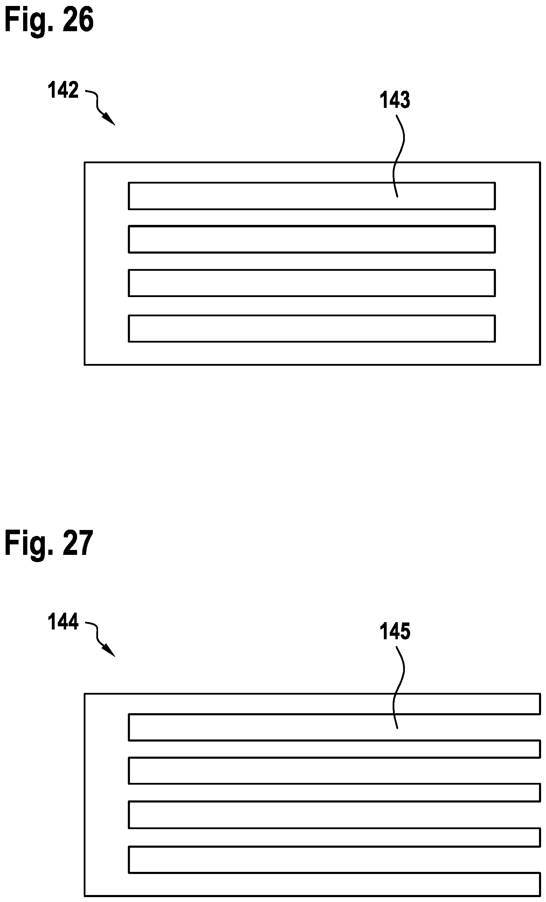

Figure 26 shows a schematic view of an embodiment of a clamping element 142 according to the present invention. This clamping element 142 can be used for the embodiment shown in Figure 25. The clamping element 142 comprises four longitudinal through holes 143.

Figure 27 shows a schematic view of a further embodiment of a clamping element 144 according to the present invention. This clamping element 144 can be used for the embodiment shown in Figure 25. The clamping element 144 comprises four longitudinal through holes 145 being axially open. Through this, the clamping element 144 has a lower mechanical stability than the embodiment shown in Figure 26, but the clamping element 144 may be easier integrated in a rechargeable battery subunit (not shown).

## Claims

1. A rechargeable battery subunit (6, 19, 35, 52, 55, 58, 66, 77, 78, 103, 108, 111, 119, 122) comprising:
- at least one rechargeable battery cell (36, 83, 93, 96, 99);
- at least one cell housing (1, 7, 21, 37, 67, 79, 110, 118, 128) for accommodating the battery cell (36, 83, 93, 96, 99), wherein the cell housing (1, 7, 21, 37, 67, 79, 110, 118, 128) has two opposite axial end faces (2, 3, 8, 9, 22, 23, 38, 39, 68, 80, 81, 116, 117, 129, 130) separated from each other by a circumferential lateral area (4, 10, 24, 40, 69, 82, 118, 131) of the cell housing (1, 7, 21, 37, 67, 79, 110, 118, 128), and at least one axial end face (2, 3, 8, 9, 22, 23, 38, 39, 68, 80, 81, 116, 117, 129, 130) comprises at least one through hole (5, 29, 41, 42, 70, 84); and
- at least one contact unit (11, 12, 30, 43, 44, 53, 60, 63, 71, 72, 85, 105, 109, 115, 132, 133) being at least partly electrically conductive and fixed to the cell housing (1, 7, 21, 37, 67, 79, 110, 118, 128) to close the through hole (5, 29, 41, 42, 70, 84),
- wherein the contact unit (11, 12, 30, 43, 44, 53, 60, 63, 71, 72, 85, 105, 109, 115, 132, 133) is electrically connected with at least one current collector (47, 48, 91, 92, 94, 95, 97, 98, 100, 101, 124, 125) of the battery cell (36, 83, 93, 96, 99) via the through hole (5, 29, 41, 42, 70, 84), and
- the contact unit (11, 12, 30, 43, 44, 53, 60, 63, 71, 72, 85, 105, 109, 115, 132, 133) comprises at least one outer contact surface (13, 14, 31, 45, 46, 73, 74, 86, 112, 113, 134, 135) facing away from the battery cell (36, 83, 93, 96, 99) for electrically connecting the battery unit (6, 19, 35, 52, 55, 58, 66, 77, 78, 103, 108, 111, 119, 122) with the outside.

2. The rechargeable battery subunit (6, 19, 35, 52, 55, 58, 66, 77, 78, 103, 108, 111, 119, 122) according to claim 1, wherein the contact unit is provided only at the axial end surface (2, 3, 8, 9, 22, 23, 38, 39, 68, 80, 81, 116, 117, 129, 130) of the cell housing (1, 7, 21, 37, 67, 79, 110, 118, 128), or both at the axial end surface (2, 3, 8, 9, 22, 23, 38, 39, 68, 80, 81, 116, 117, 129, 130) and at a portion of the lateral area (4, 10, 24, 40, 69, 82, 118, 131) of the cell housing (1, 7, 21, 37, 67, 79, 110, 118, 128).

3. The rechargeable battery subunit (6, 19, 35, 52, 55, 58, 66, 77, 78, 103, 108, 111, 119, 122) according to claim 1 or 2, wherein the contact unit (11, 12, 30, 43, 44, 53, 60, 63, 71, 72, 85, 105, 109, 115, 132, 133) is at least partly substance-to-substance bonded to the cell housing (1, 7, 21, 37, 67, 79, 110, 118, 128).

4. The rechargeable battery subunit (6, 19, 35, 52, 55, 58, 66, 77, 78, 103, 108, 111, 119, 122) according to any one of claims 1 to 3, wherein the cell housing (1, 7, 21, 37, 67, 79, 110, 118, 128) is at least partly made from a fiber composite material.

5. The rechargeable battery subunit (6, 19, 35, 52, 55, 58, 66, 77, 78, 103, 108, 111, 119, 122) according to any one of claims 1 to 4, wherein an inner or outer surface of the cell housing (1, 7, 21, 37, 67, 79, 110, 118, 128) is partly covered with a metal layer.

6. The rechargeable battery subunit (6, 19, 35, 52, 55, 58, 66, 77, 78, 103, 108, 111, 119, 122) according to any one of claims 1 to 5, wherein the cell housing (1, 7, 21, 37, 67, 79, 110, 118, 128) comprises at least one axial end section (15, 16, 25, 27) having a reduced cross-sectional area, and the contact unit (11, 12, 30, 43, 44, 53, 60, 63, 71, 72, 85, 105, 109, 115, 132, 133) encompasses the axial end section (15, 16, 25, 27).

7. The rechargeable battery subunit (6, 19, 35, 52, 55, 58, 66, 77, 78, 103, 108, 111, 119, 122) according to any one of claims 1 to 6, wherein the contact unit (11, 12, 30, 43, 44, 53, 60, 63, 71, 72, 85, 105, 109, 115, 132, 133) comprises at least one plate element (17, 32, 49, 75, 87, 120, 136) arranged on the axial end face (2, 3, 8, 9, 22, 23, 38, 39, 68, 80, 81, 116, 117, 129, 130) of the cell housing (1, 7, 21, 37, 67, 79, 110, 118, 128) and at least two leg elements (18, 33, 34, 50, 64, 65, 88, 137) spaced apart from each other, electrically connected with opposite end sections of the plate element (17, 32, 49, 75, 87, 120, 136), protruding orthogonally from the plate element (17, 32, 49, 75, 87, 120, 136) and extending along at least a part of the lateral area (4, 10, 24, 40, 69, 82, 118, 131) of the cell housing (1, 7, 21, 37, 67, 79, 110, 118, 128).

8. The rechargeable battery subunit (6, 19, 35, 52, 55, 58, 66, 77, 78, 103, 108, 111, 119, 122) according to claim 7, wherein the contact unit (11, 12, 30, 43, 44, 53, 60, 63, 71, 72, 85, 105, 109, 115, 132, 133) comprises at least one contact element (54, 56) electrically connected with the plate element (17, 32, 49, 75, 87, 120, 136), facing the battery cell (36, 83, 93, 96, 99) and being electrically connected with current collector (47, 48, 91, 92, 94, 95, 97, 98, 100, 101, 124, 125) of the battery cell (36, 83, 93, 96, 99).

9. The rechargeable battery subunit (6, 19, 35, 52, 55, 58, 66, 77, 78, 103, 108, 111, 119, 122) according to claim 7 or 8, wherein the plate element (17, 32, 49, 75, 87, 120, 136) comprises two electrically conductive contact sections (89) and an electrically non-conductive section (90) separating the contact sections (89) from each other, and the contact sections (89) are electrically connected with different current collectors (47, 48, 91, 92, 94, 95, 97, 98, 100, 101, 124, 125) of the battery cell (36, 83, 93, 96, 99).

10. The rechargeable battery subunit (6, 19, 35, 52, 55, 58, 66, 77, 78, 103, 108, 111, 119, 122) according to any one of claims 1 to 8, wherein the contact unit (11, 12, 30, 43, 44, 53, 60, 63, 71, 72, 85, 105, 109, 115, 132, 133) comprises an inner surface contacting the cell housing (1, 7, 21, 37, 67, 79, 110, 118, 128), and the inner surface is at least partly roughened.

11. The rechargeable battery subunit (6, 19, 35, 52, 55, 58, 66, 77, 78, 103, 108, 111, 119, 122) according to any one of the claims 1 to 10, wherein the contact unit (11, 12, 30, 43, 44, 53, 60, 63, 71, 72, 85, 105, 109, 115, 132, 133) comprises at least one safety venting device (121).

12. The rechargeable battery subunit (6, 19, 35, 52, 55, 58, 66, 77, 78, 103, 108, 111, 119, 122) according to any one of claims 1 to 11, comprising two or more battery cells (36, 83, 93, 96, 99) arranged within the cell housing (1, 7, 21, 37, 67, 79, 110, 118, 128), wherein homopolar current collectors (47, 48, 91, 92, 94, 95, 97, 98, 100, 101, 124, 125) of at least two of the battery cells (36, 83, 93, 96, 99) are combined with each other to form a single common current collector (126, 127) for these battery cells (36, 83, 93, 96, 99), the contact unit (11, 12, 30, 43, 44, 53, 60, 63, 71, 72, 85, 105, 109, 115, 132, 133) comprises at least one clamping element (138, 139) arranged on the side of the plate element (17, 32, 49, 75, 87, 120, 136) facing the battery cells (36, 83, 93, 96, 99), and an end section of the common current collector (126, 127) is clamped between the plate element (17, 32, 49, 75, 87, 120, 136) and the clamping element (138, 139).

13. A rechargeable battery (57, 102) comprising:
- at least two rechargeable battery subunits (6, 19, 35, 52, 55, 58, 66, 77, 78, 103, 108, 111, 119, 122) according to any one of the claims 1 to 12; and
- at least one clamping device (59, 104) pressing the battery subunits (6, 19, 35, 52, 55, 58, 66, 77, 78, 103, 108, 111, 119, 122) against each other so that the contact units (11, 12, 30, 43, 44, 53, 60, 63, 71, 72, 85, 105, 109, 115, 132, 133) of directly neighboring battery subunits (6, 19, 35, 52, 55, 58, 66, 77, 78, 103, 108, 111, 119, 122) electrically contact each other.
